# EUROPEAN PATENT APPLICATION

(11) **EP 3 457 727 A1**
(43) Date of publication of application: **20.03.2019**
(21) Application number: 17306208.4
(22) Date of filing: 18.09.2017
(51) Int. Cl.: H04W 4/80

(54) **METHOD TO PREVENT UNAUTHORIZED ACCESS TO A CONTACTLESS DEVICE**

(71) Applicant: GEMALTO SA, 92190 Meudon (FR)
(72) Inventor: RANTALA, Janne, 92190 MEUDON (FR); MASSBACKA, Janne, 92190 MEUDON (FR)
(74) Representative: Lotaut, Yacine Diaw

(57) **Abstract**

This invention relates generally to a method of preventing unauthorized access to a contactless device. The invention relates more particularly to the field of methods implemented so that an owner consent is provided to a reader before any access to its contactless device. The invention proposes to introduce slight modification on the behavior of the contactless device and an adaptation from the reader. With the present invention, the reader need to know in advance the UID of the contactless device he would like to establish a communication. The UID is generated by the reader from identity information provided by a positive action corresponding to a user consent. The present invention proposes to send a SELECT command directly to the corresponding contactless device with the complete UID, without using the ANTICOLLISION loop compliant with the standard 14443 type A. The contactless device will grant access to only reader sending a SELECT command with the complete UID.

## Description

### TECHNICAL FIELD

This invention relates generally to a method of preventing unauthorized access to a contactless device. The invention relates more particularly to the field of methods implemented so that an owner consent is provided to a reader before any access to the contactless device. The invention is also related to a reader and a contactless device configured to implement such method.

### BACKGROUND ART

A contactless communication system for performing wireless communication at close range in a non-contact manner with the use of a contactless device is in widespread use. The contactless devices have an embedded antenna connected to a microchip, enabling the chip to pick up and respond to radio waves. The energy required for the contactless device to manipulate and transmit data is derived from the electromagnetic field generated by a reader. Contactless device do not require direct contact with the reader because they employ the passive transponder technology of Radio Frequency Identification (RFID). By just waving the contactless device near the reader, secure identification, electronic payment transaction and authentication are completed in milliseconds.

Unfortunately, due to the wireless nature of the contactless device, it is entirely possible that a contactless reader may be used for surreptitious interrogation (e.g., data skimming) of the contactless device.

Indeed, since a contactless devices do not need to come into physical contact with the reader to exchange information, the user can no longer take a proactive role in securing the information on the chip.

One known solution for the user is to rely entirely on software encryption or biometric techniques for security.

Another known solution is to use an electromagnetic shielding to protect information without requiring proactive measures by the owner. There are a number of ways in which shielding can prevent the exchange of information between a contactless device and a reader.

One simplest method is to prevent the contactless device from being powered up by the electromagnetic field by shielding the contactless device. This shielding allows isolating the contactless device from the surrounding world by different forms of metal shielding. Although shielding the contactless device can be effective, it is inconvenient for user because it requires to the user to remember that the contactless device is on a shield during use.

Another solution is to simply shield or provide a means to disabling the antenna which may employee a pressure sensitive switch or special shielding built into the antenna. The problem with shielding only the antenna is that the antenna can couple capacitively to the shield in such a way that the shield itself becomes an antenna.

Another known solution is to prevent the access to only part of the functions and contents of the contactless device, e.g. using authentication protocols like Basic Access Control (BAC) or Password Authenticated Connection Establishment (PACE). This has the disadvantage that the employed cryptographic computation may take considerable amount of time, and that it is possible to deduce some information about the user from the pre-authentication communication.

Therefore, it seems that a real need exists for method able to prevent unauthorized access to a contactless device without consent of the user.

### SUMMARY OF THE INVENTION

The following summary of the invention is provided in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

In view of the shortcomings of the prior art, it is an object of the present invention to prevent unauthorized access to a contactless device without the user consent. It is known that the best way to prevent unauthorized exchanges is to prevent the magnetic field generated by the reader from powering up the contactless device in the first instance.

Today it exists various communication schemes between the reader and the contactless device, for example, called type A in the IC card system based on ISO/IEC 14443. The ISO/IEC 14443 proximity card standards (ISO 14443) have been used for several contactless card deployments worldwide.

The ISO 14443 generally recommends in its part 3 an INITIALIZATION and an ANTICOLLISION processes to deal with the presence of multiple contactless devices in a reader's operating volume or field. The INITIALIZATION describes the requirements for proximity coupling device (PCD) (i.e., the reader) and the contactless device to establish communication when the contactless device is brought into the reader's radio frequency (RF) field. And the ANTICOLLISION defines what happens when multiple contactless devices enter the magnetic field at the same time, identifying how the system determines which contactless device to use in the transaction and ensuring that all contactless devices presented are inventoried and processed.

Under ISO 14443 Part 3, the reader first polls and inventories all contactless device entering its field using polling commands such as Request (REQ) and Answer To Request (ATQ) commands. Then, an ANTICOLLISION algorithm or loop is used to prepare for dialogue between the reader and one or more selected contactless device out of the total number of contactless devices responding to a request command. For Type A card, a binary search algorithm based on the unique identifier (UID) of each contactless device is prescribed. Communication with the contactless device starts with the ANTICOLLISION procedure, where the reader sends a request and contactless devices in the RF field answer. In Type A, the first request is called REQA, to which contactless devices answer with ATQA. The ATQA is often invariant between contactless devices.

The ISO 14443 INITIALIZATION and ANTICOLLISION scheme is designed to allow the construction of readers capable of communication with several contactless devices of the same type, which are powered simultaneously. The contactless devices Types A wait silently in the field for a polling command. Then the reader sends an ANTICOLLISION command with no UID or a partial UID of the contactless device, to which the contactless device(s) with matching partial UID will answer with the remainder of their UID. Reader can see potential collisions in the RF field (there are several contactless devices answering but they have different UIDs) and then send new ANTICOLLISION command where the colliding bit is set to 0 or 1. This is repeated until the reader has found one UID in full without collisions. This process is referred to as the ANTICOLLISION loop. Finally the reader sends a SELECT command with the complete UID, to which the selected CONTACTLESS DEVICE answers with SAK.

The ISO 14443 ANTICOLLISION scheme have known drawbacks. For example, the ANTICOLLISION algorithms can become corrupted if contactless devices enter and/or leave the reader field after they have been inventoried or tallied. Further, concurrent reader communication with a number of contactless devices distributes available power, which is limited, between the contactless devices. Low power availability may affect contactless device functionality.

The method of the present invention overcomes known drawbacks of conventional ANTICOLLISION schemes of type A that are used in or recommended for contactless devices.

The purpose of the present invention is to let the reader power up and establish communication with a single contactless device even if there are several in the RF field.

The method proposed by the present invention allows to let the reader to establish direct communication with one single contactless device even if there are several in the RF field. The invention proposes to introduce slight modification on the behavior of the contactless device and an adaptation from the reader. With the present invention, the reader need to know in advance the UID of the contactless device he would like to establish a communication. Whereas, by using the ANTICOLLISION schemes of type A, the reader does not need to know the UID of any of the contactless devices in advance, all contactless devices allow establishment of communication.

The present invention proposes to send a SELECT command directly to the contactless device of the present invention, without using the ANTICOLLISION loop.

According to the present invention, the contactless device will grant access to only reader sending a SELECT command with its complete UID. The contactless device will deny access to readers not aware of its complete UID. The contactless device of the present invention does not answer to ANTICOLLISION commands (with no or partial UID). The reader compliant to these contactless device does not try to use the ANTICOLLISION command when it knows the UID, but goes directly to SELECT command (which is allowed in the standard).

According to an embodiment of the present invention, the UID of the contactless device is computed by the reader from identity information provided by a positive action corresponding to the user consent.

In an embodiment, the identity information can be entered onto the reader. In an example the identity information can be entered by the user to the reader.

In another embodiment, the identity information is retrieved by the reader on the body of the contactless device. In another embodiment, the identity information can be printed on the contactless device. The identity information can be encoded into an optical character recognition format such as a Machine-Readable Zone (MRZ), a bar code...The reader in this case comprise optical means able to scan and decode the optical encoded data. The identity information can be printed in any known format. In this case, the reader comprises means able to read the said identity information.

The identity information provided to the reader by such positive actions represent the consent of the owner of the contactless device. Therefore only reader in possession of the identity information can establish communication with the contactless devices requiring knowledge of their UID.

Readers not having this information or which do not utilize it to skip the ANTICOLLISION loop cannot establish communication with such contactless devices. It is therefore not possible to access them without a visual inspection or data provided to the reader, which usually correlates to consent of the user.

The readers adopting this method can still operate with all ISO 14443 compliant contactless devices, as they can use the ANTICOLLISION loop normally, and also with contactless devices of the present as skipping the ANTICOLLISION loop is compliant to the standard ISO 14443. But the contactless devices of the present invention do not operate on readers that are not able to skip the ANTICOLLISION loop.

In another embodiment, the contactless device can support both the direct SELECT protocol and the ANTICOLLISION loop protocol. In this case, according to the completeness of the identifier information provided by the reader, the contactless device uses the ANTICOLLISION loop or the direct SELECT protocol accordingly. Indeed, if the identifier information received is complete, the contactless device triggers the direct SELECT protocol otherwise the ANTICOLLISION loop protocol is selected. This allows to use the same device to establish services that do not require user consent and services that do require it.

To achieve those and other advantages, and in accordance with the purpose of the invention as embodied and broadly described, the invention proposes a method to prevent unauthorized access to a contactless device by a contactless terminal reader wherein when the contactless device is in the RF field of the terminal reader:
- a unique identifier of the contactless device is generated by the terminal reader according to identity information provided by a positive action corresponding to a user consent,
- the contactless device is configured to deny any request of access which does not comprises its complete unique identifier,
- the terminal reader is configured to establish a contactless communication directly with said contactless device requiring the knowledge of its complete unique identifier.

In other various methods, the communication between the terminal reader and the contactless device is under the protocol communication ISO 14443 type A.

In other various methods, the terminal reader is configured to skip an ANTICOLLISION loop of the standard ISO 14443 type A and to send instead a SELECT command with the complete generated unique identifier to the contactless device.

In other various methods, the identity information is printed on a support of the contactless device.

In other various methods, the identity information is printed in a machine readable format. The machine readable format can be a machine readable zone (MRZ), a barcode or a guilloche network.

In other various methods, the identity information is entered onto the terminal reader.

In other various methods, the generation of the unique identifier of the contactless device comprises the following step:
- the terminal reader computes the unique identifier from an implemented function and at least one part over the identity information retrieved by the terminal reader from the printed identity information or provided to the terminal reader.

In other various methods, the implemented function is a cryptographic operation.

The contactless device can be a driving licenses, identity cards, membership cards, badges or passes, passports, discount cards, banking cards, money cards, multi-application cards, and other papers of value; and security documents such as bank notes wherein a contactless module is inserted.

The present invention relates also to a contactless terminal reader comprising:
- a unique identifier generator module configured to generate a unique identifier of a contactless device from identity information provided by a positive action corresponding to a user consent according to any previous claims,
- a setup phase module configured to establish a direct communication with the contactless device which is requiring the knowledge of its complete unique identifier, according to any previous claims.

In other various methods, the contactless terminal reader according to the previous claim, wherein the terminal reader is compliant with the standard ISO 14443 type A.

The present invention also relates to a contactless device comprising means to grant access request only for contactless terminal reader in possession of its complete unique identifier computed from identity information provided by a positive action corresponding to a user consent according to any previous claims.

Other aspects and advantages of the invention will become apparent from the following detailed description, taken in conjunction with the accompanying drawings, illustrating by way of example the principles of the invention.

### BRIEF DESCRIPTION OF THE DRAWINGS

The following detailed description will be better understood with the drawings, in which:
FIG. 1 schematically illustrates a contactless device wherein its identity information is printed on its body.
FIG. 2 illustrates the different entities involved in a process to establish a contactless communication between a reader and a contactless device.
FIG. 3 is a logic flow diagram in accordance with an exemplary embodiment of this invention during a setup phase of a contactless communication.

### DETAILED DESCRIPTION OF THE EMBODIMENTS OF THE INVENTION

It is to be understood that various other embodiments and variations of the invention may be produced without departing from the spirit or scope of the invention. The following is provided to assist in understanding the practical implementation of particular embodiments of the invention.

The same elements have been designated with the same referenced numerals in the different drawings. For clarity, only those elements which are useful to the understanding of the present invention have been shown in the drawings and will be described.

Moreover, when an action is said to be performed by a device, it is in fact executed by a microprocessor in this device controlled by instruction codes recorded in a program memory on said device. An action is also ascribed to an application or software. This means that part of the instruction codes making up the application or software are executed by the microprocessor.

Reference throughout the specification to "an embodiment" or "another embodiment" means that a particular feature, structure, or characteristic described in connection with an embodiment is included in at least one embodiment of the subject matter disclosed. Thus, the appearance of the phrases "in an embodiment" or "in another embodiment" in various places throughout the specification is not necessarily referring to the same embodiment. Further, the particular features, structures or characteristics may be combined in any suitable manner in one or more embodiments.

The contactless devices can be driving licenses, identity cards, membership cards, badges or passes, passports, discount cards, banking cards, money cards, multi-application cards, and other papers of value; and security documents such as bank notes wherein a contactless module is inserted. The contactless device may take the shape of card or booklet or something else.

Hereinafter, an embodiment of the present invention will be described in the context of a data carrier wherein the identity information is printed on the body of the data carrier.

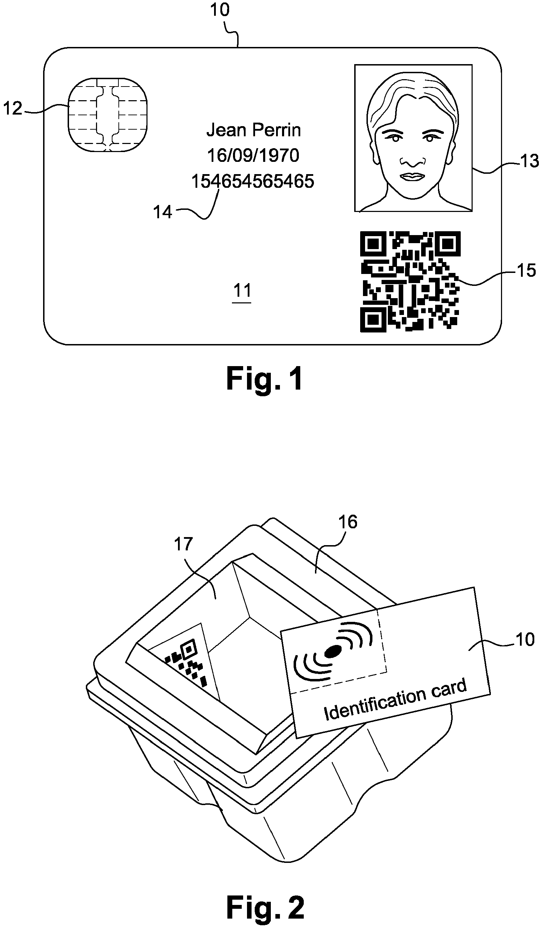

FIG. 1 illustrates a data carrier in the form of an identification card 10, e.g. a national identity card or a driving license. The identification card 10 of the present invention can be manufactured according to any type of known manufacturing process.

The identification card 10 comprises a support 11. The support 11 can comprise fibrous layers and/or plastic layers and/or metallic layers or a combination of such layers. The identification card 10 can comprise a picture 13 of the owner of the identification card 10. The picture 13 may be fastened or integrated into the support 11. The support 13 may also bears alphanumeric identification data 14 relating to the owner of the identification card 10. The identification data 14 may comprise usual identification data known from person skilled in the art, such as the first and last names, the date of birth, the place of birth or the like. The identification data 14 may also comprise additional information like a reference of the identification card 10 or the identification of the authority that issued the identification card 10.

The identification card 10 comprises a contactless chip 12. The chip 12 may be embedded between several layers of the support 11 according to techniques commonly known by person skilled in the art.

The support 11 also comprises a machine readable area 15. The machine readable area 15 comprises identity information related to the unique identifier (UID) of the contactless chip 12:
Machine readable techniques are well known to the persons skilled in the art. The particular suitability of such techniques will vary depending on what effects are desired to be achieved and there compatibility with the present invention described below. Persons skilled in the art can readily ascertain their suitability.

In an embodiment, the machine readable area 15 is data encoded in optical character recognition format.

In the example illustrated in FIG. 1, the machine readable area 15 is a 2D barcode. Encoding specifications of 2D barcodes such as QR Code, Aztec Code, PDF417 or Datamatrix can notably be used. The 2D-barcode may notably comply with the requirements set in the ISO/IEC 15415 specification.

In an embodiment, the machine readable area 15 can be a special machine-readable zone (MRZ). In an embodiment, the machine readable area 15 may notably be based on a guilloche network.

The machine readable area 15 may be integrated in the support by printing or engraving, or by various techniques known per se by person skilled in the art. The machine readable area 15 may notably be based on microprinting, on optical variable ink, on UV printing, on rainbow printing, on a diffractive optical variable device, on laser engraving or on changeable multiple laser image.

FIG. 2 shows entities involved in a flow diagram during a setup phase of a contactless communication between a terminal reader 16 and the identification card 10.

The terminal reader 16 comprises a scanner 17 able to scan and decode the machine readable area 15. The scanner 17 is controlled by an application executed on the terminal reader 16. This application is adapted to decode the machine readable area 15 into binary data. The scanner 17 and the associated application may conform to the 2D barcode ISO/IEC 15426-2 specifications.

The terminal reader 16 may be any mobile communication device comprising a scanner and supporting contactless communication. The terminal reader 16 may be realized as a smart phone, a computer and the like.

In an embodiment, the terminal reader 16 can be a control system for checking the validity of data carrier. The use of such control system may for instance be performed in airport terminals or in border checkpoints. Such control system can comprise a terminal and a scanner connected to the terminal.

The form of the terminal reader 16 illustrated in FIG. 2 is merely an example for the sake of convenience in the description, and the kind and form of the terminal reader 16 described in the present disclosure are not interpreted as being limited to those of the terminal shown in FIG. 2.

The identification card 10 is a non-contact card that transmits and receives information using an RF, and is a contactless device that supports RF communication protocols such as ISO 14443 Type A. Moreover, the identification card 10 may be referred to as a PICC (Proximity IC Contactless device), or may be a typical RF contactless device. The form of the identification card 10 is merely an example for the sake of convenience in the description, but is not limited thereto.

Before establishing a communication between the terminal reader 16 and the identification card 10, the terminal reader 16 may generate the unique 10 (UID) of the identification card 10 based on identity information provided to the terminal reader.

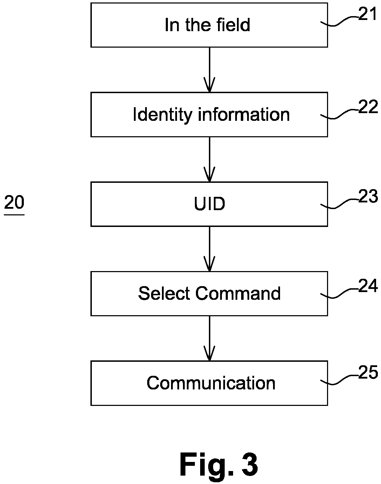

FIG.3 illustrates an exemplary flow diagram during a communication setup phase 20 between the terminal reader 16 and the identification card 10 according to the communication protocol of ISO 14443 Type A. Therein, the process flow is depicted with labeled arrows to which respective numbers are assigned. The flow is understood as being performed sequentially from top to bottom as indicated by the increasing numbers. However, it should be noted that there may be multiple instances of this protocol run in parallel without specified ordering.

FIG. 3 is a flow chart depicting a set of functions 20 that can be carried out in accordance with an example embodiment. The set of functions 20 can be performed during the setup phase of communication. The set of functions 20 are shown within steps 21 through 25. A description of these steps now follows.

When the identification card 10 is in the RF field of the terminal reader 16, the setup phase process is set up, at step 21. The identification card 10 is thus in the communication range of the terminal reader 16.

At step 22, the scanner 17 of the terminal reader 16 scan the machine readable area 15. The scanned data is decoded into a binary data string. The terminal reader 16 retrieves the identity information related to the UID of the identification card 10 from the binary data string.

The terminal reader 16 may generate, at step 23, the UID of the identification card 10 from at least one part over the identity information retrieved. The UID is generated by using an implemented embedded function or macro on at least one part over the identity information. The implemented function can be a one-way function such a hash function or a MAC (Message Authentication Code) operation. In an embodiment, the implemented function can be cryptographic encryption scheme. The UID can be an encryption of at least one part over the identity information with an encryption key stored or provided to the terminal reader 16.

The method of generating the UID on at least one part over the identity information is virtually limitless and will depend on what type of technologies are used to generate such UID. Persons skilled in the art can readily ascertain their suitability.

The UID may have different size (byte) of 4 bytes, 7 bytes or 10 bytes depending on the identification card 10.

The standard ISO 14443 Type A offers the possibility to send a SELECT command directly, without using the ANTICOLLISION loop process, when the UID is already known.

Accordingly, at step 24, the terminal reader sends a SELECT command directly to the identification card with the complete UID generated.

The identification card 10 transmits to the terminal reader 16 a SAK (Select Acknowledge, Type A) as the response to the received command.

After the reception of the SAK by the terminal reader 16, the INITIALIZATION phase 20 is over and the contactless communication between the terminal reader 16 and the identification card 10 is established.

With the present invention, only a terminal reader in possession of the UID of the identification card 10 can establish communication with this identification card.

With the present invention, a terminal reader not able to skip the ANTICOLLISION loop cannot establish any communication with the identification card of the present invention.

With the present invention, the generation of the UID from identity information provided to the terminal reader 16 allows to the owner of the identification card 10 to be sure that his commitment is used properly and that he approves on the contactless communication which is ongoing between the terminal reader 16 and the contactless device 10.

According to the embodiment illustrated in FIG. 2, it is not possible to access the contactless device 10 without visual inspection (scan phase), which usually correlates to consent of the user.

The terminal readers adopting this method can still operate with all ISO 14443-3 compliant PICCs, as they can use the ANTICOLLISION loop normally, and as skipping the ANTICOLLISION loop is compliant to the standard.

It will be appreciated by those skilled person that changes could be made to the embodiments described above without departing from the broad inventive concept thereof. It is understood, therefore, that this invention is not limited to the particular embodiments disclosed, but it is intended to cover modifications, variations, combinations and equivalents within the scope of the present invention.

For example, in passports the identity information is encoded as a MRZ. In another embodiment, the identity information is plain text printed onto the support 11 of the identification card 10. In this case, the terminal reader can comprise a camera configured to read such plain text.

In an embodiment, instead of deriving the UID from identity information printed onto the support 11, the owner involvement can be required. The owner can be prompted by the terminal reader 16 to enter a PIN or the like from its interface. From the data entered by the owner, the terminal reader can derivate the UID.

The invention should not be limited by the above described embodiments, methods and examples. Accordingly, it is intended that the appended claims cover such variations as fall within the scope of the invention.

## Claims

1. Method to prevent unauthorized access to a contactless device by a contactless terminal reader wherein when the contactless device is in the RF field of the terminal reader:
- a unique identifier of the contactless device is generated by the terminal reader according to identity information provided by a positive action corresponding to a user consent,
- the terminal reader is configured to establish a direct contactless communication with said contactless device requiring the knowledge of its complete unique identifier.

2. Method according to the previous claim, wherein the contactless device is configured to deny any request of access which does not comprises its complete unique identifier.

3. Method according to the previous claim, wherein the communication between the terminal reader and the contactless device is under the protocol communication ISO 14443 type A.

4. Method according to the previous claim, wherein the terminal reader is configured to skip an ANTICOLLISION loop of the standard ISO 14443 type A and to send instead a SELECT command with the complete generated unique identifier to the contactless device.

5. Method according to any previous claims, wherein the identity information is printed on a support of the contactless device.

6. Method according to the previous claim, wherein the identity information is printed in a machine readable format.

7. Method according to the previous claim, wherein the machine readable format is a machine readable zone (MRZ), a barcode or a guilloche network.

8. Method according to any previous claims, wherein the identity information is entered onto the terminal reader.

9. Method according to any previous claims, wherein the generation of the unique identifier of the contactless device comprises the following step:
- the terminal reader computes the unique identifier from an implemented function and at least one part over the identity information retrieved by the terminal reader from the printed identity information or provided to the terminal reader.

10. Method according to the previous claim, wherein the implemented function is a cryptographic operation.

11. Method according to any previous claim, wherein the contactless device can be a driving licenses, identity cards, membership cards, badges or passes, passports, discount cards, banking cards, money cards, multi-application cards, and other papers of value; and security documents such as bank notes wherein a contactless module is inserted.

12. Contactless terminal reader comprising:
- a unique identifier generator module configured to generate a unique identifier of a contactless device from identity information provided by a positive action corresponding to a user consent according to any previous claims,
- a setup phase module configured to establish a direct communication with the contactless device which is requiring the knowledge of its complete unique identifier, according to any previous claims.

13. Contactless terminal reader according to the previous claim, wherein the terminal reader is compliant with the standard ISO 14443 type A.

14. Contactless device comprising means to grant access request only for contactless terminal reader in possession of its complete unique identifier computed from identity information provided by a positive action corresponding to a user consent according to any previous claims.
